# EUROPEAN PATENT SPECIFICATION

(11) **EP 2 214 520 B1**
(45) Date of publication and mention of the grant of the patent: **08.02.2012**
(21) Application number: 08836806.3
(22) Date of filing: 08.10.2008
(51) Int. Cl.: A23L 2/38

(54) **A PROCESS FOR PREPARING SOONG-NEUNG IN ASEPTIC PACKAGE**
VERFAHREN ZUR HERSTELLUNG VON SOONG-NEUNG IN KEIMFREIER VERPACKUNG
PROCÉDÉ DE PRÉPARATION DE SOONG-NEUNG DANS UN EMBALLAGE ASEPTIQUE

(30) Priority: 09.10.2007 KR 20070101296
(43) Date of publication of application: 11.08.2010
(73) Proprietor: CJ Cheiljedang Corp., Jung-gu Seoul 100-749 (KR)
(72) Inventor: KIM, Jong-Wook, Seoul 157-798 (KR); LEE, Chang-Yong, Seoul 120-708 (KR)
(74) Representative: Portal, Frédéric
(86) International application number: PCT/KR2008/005893
(87) International publication number: WO 2009/048252

(56) References cited:
- JP-A- 6 269 264
- JP-A- 2000 232 870
- KR-B1- 900 005 693
- KR-B1- 940 003 683
- KR-B1- 950 009 132
- KR-B1- 950 014 514
- DATABASE FSTA [Online] INTERNATIONAL FOOD INFORMATION SERVICE (IFIS), FRANkFURT-MAIN, DE; CHEIGH H -S ET AL: "Studies on soong-neung flavour. II. Identification of some volatile pyrazine and carbonyl compounds in soong-neung (extract of cooked and roasted rice). (translated)" XP002602408 Database accession no. FS-1976-12-H-2144 & KOREAN JOURNAL OF FOOD SCIENCE AND TECHNOLOGY 1975, vol. 7, no. 1, 1975, page 15, FOOD RESOURCES LAB., KOREA INST. OF SCI. & TECH., SEOUL, S. KOREA

## Description

### Technical Field

The present invention relates to a process for preparing Soong-Neung in aseptic package using roasted rice, more specifically, to a process for preparing Soong-Neung in aseptic package by mixing the roasted rice and polished rice and sterilizing them, adding water-for-cooking to prepare Soong-Neung, sealing Soong-Neung in a package under the aseptic conditions and boiling and cooling the package.

### Background Art

Generally, Soong-Neung (which means drinking water boiled in a kettle where rice has been steamed; hereinafter refer to "Soong-Neung") is prepared by adding a regular amount of water to Nurunggi(which means scorched rice from the bottom of the pot; hereinafter refer to "Nurunggi") obtained after cooking of rice in kitchen and then boiling them for more than 10 minutes at 100°C.

As a known method for preparing Soong-Neung product, methods for the preparation of Soong-Neung in the type of instant tea or beverage have been disclosed ((The Korean Publication Nos. 740000443 (B), 870000263 (B), 860002968 (A), 890003693 (8), 920009339 (A), 930011900 (A) and KR 95000913 (B) et al.). In addition, the Korean Publication No.950011135 (B) disclosed a method for producing instant Soong-Neung comprising the step of cooking rice or mixture of cereals in an electric rice-cooker, and forming the cooked rice into Nurunggi with forming machine, and soaking Nugunggi in tepid water to contain water in amount of 80 to 90% and lyophilizing them rapidly, and then vacuum drying them to water content of less than 5% and vacuum packaging them.

In addition, there is disclosed a concentrated Soong-Neung which is prepared by concentrating Soong-Neung and packaing them with sterilizing to permit everybody to prepare the rice tea easily at home by only pouring hot water(Korean Publication No.20030029532 (A)), and also disclosed instant Soong-Neung product which is prepared by mixing water, polished rice and unpolished rice and heating them consistantly at 140 to 180°C to accomplish boiling and roasting together and then naturally drying them (Korean Utility Model Application No.20-2005-3617).

However, there are problem that perfume of Soong-Neung are lost and it makes a quality of Soong-Neung to be pooled when Soong-Neung was prepared with previously prepared dried-Nugunggi and a regular amount of rice. In addition, it has been known that 10³∼10⁴ CFU/g of microorganism are existed on the surface of rice. By those usual process for preparing Soong-Neung, general cells of microorganism existing on the surface of Nurunggi and rice can be extirpated, but heat-stable spores cannot completely extirpated. Those heat-stable microorganism does not cause a problem in case of Soong-Neung cooked and ate in the home or general Soon-Neung prepared in the plant and ate within one day. However, the growth of those heat-stable microorganism causes a great problem in case of preserving and distributing Soong-Neung for a long time at a normal temperature.

Accordingly, there is a problem that Soong-Neung is impossible to preserve for a long time as preparing by the existing method.

In the result of the investigation and experiment to solve the problem, we can accomplish the process for preparing Soong-Neung according to the present invention which is capable of satisfying quality properties of excellent taste, perfume and texture.

### Disclosure of Invention

### Technical Problem

Accordingly, the object of the present invention is to provide a process for preparing Soong-Neung in aseptic package having excellent taste, texture and inherent perfume and capable of preserving for a long time by ensuring the safety of product in the aseptic packaging process in preparing Soong-Neung with roasted rice and polished rice.

### Technical Solution

The present invention provides a process for preparing Soong-Neung in aseptic package capable of preserving for a long time of more than 6 months at room temperature and having stability against microorganism as well as no change in the perfume pewliar to Soong-Neung, comprising the step of: mixing polished rice and unpolished rice and roasting them to prepare roasted rice; washing the roasted rice with water; washing polished rice and soaking it in the water; mixing the roasted rice and the polished rice and sterilizing them; extracting the masted rice with hot water and filtering and sterilizing it with UV to obtain water-for-cooking rice; adding the water-for-cooking rice to sterilized mixture of roasted rice and polished rice to make Soong-Neung; and sealing Soong-Neung under aseptic condition after cooking completed and cooling followed by boiling to prepare instant Soong-Neung in aseptic package.

In the present invention, description of "polished rice" means a rice polished by pounding to a milling degree of more than 10.

In the present invention, description of "unpolished rice" means a rice polished by pounding to a milling degree of 7∼8.

In the present invention, description of "roasted rice" means a mixture of roasted polished rice and unpolished rice which obtained by roasting polished rice and unpolished rice with salt.

In the present invention, description of "washing" means a process of washing rice with water.

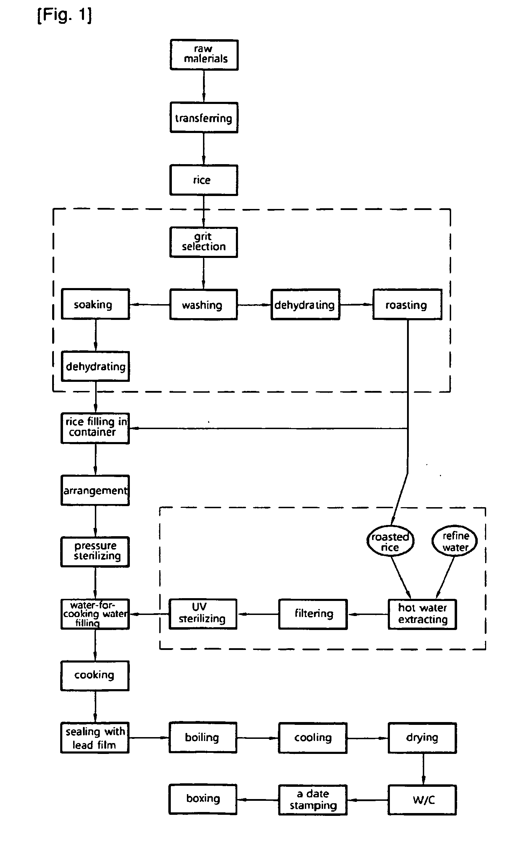

In the hollowing, the process according to the present invention will be explained more detailed in reference to Fig. 1.

Firstly, polished rice and unpolished rice are roasted with salt to prepare roasted rice. It is preferred to perform the masting process within 15 to 30 minutes at 130 to 145°C.

The roasted rice is washed with water in order to remove rice bean and other impurities from the roasted rice. It is preferred to perform the washing process for 5 times.

Then, polished rice is washed with refined water to remove starch materials and other impurities on the surface of rice, and the washed rice is soaked into water for about 1 hours and put in fixed container such as a fine steer-net to dehydrate.

A general amount of the washed-roasted rice and the soaked-polished rice are mixed and filled them into thermostable plastic container. Preferable mixing ratio of the roasted rice and the polished rice is 1:1.

The container filled with the roasted rice and the polished rice is heat sterilized at high temperature, preferably above 140°C, more preferably for 45 to 5.0 seconds at 140 to 143°C for 7 to 8 times with high temperature and presuration sterilizing apparatus to sterilize microorganism capable of existing on the rice. At this point, it is necessary for adequately controlling the sterilization conditions since perfume of Soong-Neung can be lost if the sterilization conditions are excessive.

And then, the roasted rice obtained by the separate process is hot water extracted with refined water at 80 to 90°C for 30 minutes, and filtered and sterilized with UV to obtain water-for-cooking rice.

After completion of the sterilization process, the container filled with the roasted rice and the polished rice is filled with the water-for-cooking rice. The container filled with the water-for-cooking rice is cooked at the steam temperature of 100 °C for 30 minutes. At this point, perfume pecurial to Soong-Neung is maximazed with diffusing perfume of roasted rice into Soong-Neung, and Soong-Neung has specific stickiness with erupting starch materials into water-for-cooking rice.

As the completion of the cooking process, Soong-Neung is sealed with lead film and made to product via boiling, cooling and drying process in the clean room(under class 100, "cleanness standard to clean room" of National Aeronautics and Space Administration (NASA), 100 particles of more than 0.5µm within 1 ft³).

The obtained Soong-Neung in aseptic package can be preserved for a long time of more than 6 months at room temperature.

### Advantageous Effects

The Soong-Neung in aseptic package prepared according to the process of the present invention can be preserved for a long time of more than 6 month at room temperature by the sterilization process, and have maximized perfume peculiar to Soong-Neung as diffusing perfume of roasted rice, and have a peculiar stickiness and thus have no change in perfume of Soong-Neung, and is excellent characteristics in divergence and smooth taste as erupting starch material from rice to water-for-cooking rice, such that the present invention is very useful to food industry since Song-Neung of the present invention is equvalent in quality to that of prepared by conventional home cooking method and can be preserved for a long time.

### Brief Description of the Drawings

Fig. 1 is a flow diagram showing the process for preparing Soong-Neung in aseptic package using the roasted rice according to the present invention.

Fig. 2 is a graph showing the result of sensory test for Soong-Neungs prepared in examples 1 to 8.

Figs. 3 and 4 are graph and chart showing the result of quantitative analysis for carbonyl compound of Soong-Neungs prepared in examples 1 to 8.

Figs. 5 and 6 are graph and chart showing the result of quantitative analysis for phenol compound of Soong-Neungs prepared in examples 1 to 8.

### Best Mode for Carrying Out the Invention

In the followings, the present invention is more detailed described with reference to the attached drawings. However, a range of the present invention can not be restricted by those examples.

### <Example 1 : Comparative example>

200g of polished-rice was washed with water for 5 times, and soaked it into water for 1 hour, and then moisture was removed in a fine steer net.

To 200g of polished-rice, 160g of water was added and heated for 30 minutes to prepare Nurunggi.

To 20g of the obtained Nurunggi and 20g of cooked rice, 230g of water was added and heated for 10 minutes to prepare Soong-Neung.

### <Example 2 : Comparative example >

200g of polished-rice was washed with water 5 times, and soaked into water for 1 hour, and then moisture was removed in a fine steer net.

Container was filled with 20g of the polished-rice and 20g of commercially available Nurunggi, and the container was put and sealed into high temperature and pressure sterilization device(Shinwa CO. Ltd,) and then was sterilized by blowing high pressure steam at 140 to 143°C for 5.0 seconds. These high temperature steam sterilization process were repeated for 7 times

After the high temperature steam sterilization process, 230g of water-for-cooking rice(general water) was added to each of the sterilized container. The container was maintained in rice cooker at the steam temperature of 100°C uniformly for 30 minutes to prepare Soong-Neung.

After completion of the rice cooking, the container was sealed with lead film under the aseptic state and boiled with standing for about 12 minutes, and then the preparation of Soong-Neung was completed with cooling in 10°C of water for 15 minutes.

### <Example 3 : Comparative example >

200g of polished-rice was washed with water for 5 times, and soaked into water for 1 hour, and then moisture was removed in a fine steer net.

Container was filled with 20g of the polished-rice and 20g of commercially available Nurunggi, and the container was put sealed into high temperature and pressure sterilization device (Shinwa CO. Ltd,) and then sterilized by blowing high pressure steam at 140 to 143°C for 5.0 seconds. These high temperature steam sterilization process were repeated for 7 times.

As the separated process, to 30g of the commercially available Nurunggi, 1000g of water was added and hot-water extracted at 90°C for 30 minutes to prepare water-for-cooking rice.

After the high temperature steam sterilization process, 230g of water-for-cooking rice was added to each of sterilized container. The container was maintained in rice cooker at the steam temperature of 100°C uniformly for 30 minutes to prepare Soong-Neung.

After the completion of the rice cooking, the container was sealed with lead film under the aseptic state and boiled with standing for about 12 minutes and then the preparation of Soong-Neung was completed with cooling in 10°C of water for 15 minutes.

<Example 4>

Polished rice and unpolished rice were mixed together at a ratio of 1 : 1 and roasted with salt at 100 to 115°C to obtain roasted rice. The roasted rice was washed with water for 5 times to remove rice bran and other impurities.

200g of polished rice was washed with water for 5 times to remove starch material and other impurities on the surface of rice and soaked into water for 1 hour, and then moisture was removed in a fine steer net.

Container was filled with 20g of the roasted rice and 20g of polished rice, and the contaniner was put and sealed into high temperature and pressure sterilization device (Shinwa CO., Ltd,) and then sterilized by blowing high pressure steam at 140 to 143°C for 5.0 seconds. These high temperature steam sterilization process were repeated for 7 times.

As a separated process, to 30g of the washed roasted rice, 1000g of water was added and hot-water extracted at 90°C for 30 minutes to prepare water-for-cooking rice.

After the high temperature steam sterilization process, 230g of water-for-cooking rice was added to each of sterilized container. The container was maintained in rice cooker at the steam temperature of 100°C uniformly for 30 minutes to prepare Soong-Neung.

After the completion of the rice cooking, the container was sealed with lead film under the aseptic state and boiled with standing for about 12 minutes and then the preparation of Soong-Neung was completed with cooling in 10°C of water for 15 minutes.

<Example 5>

Soong-Neung was prepared as the same process of example 4 except that the process for obtaining roasted rice was performed at temperature of 115 to 130°C.

<Example 6>

Soong-Neung was prepared as the same process of example 4 except that the process for obtaining roasted rice was performed at temperature of 130 to 145°C.

<Example 7>

Soong-Neung was prepared as the same process of example 4 except that the process for obtaining roasted rice was performed at temperature of 145 to 160°C.

<Example 8>

Soong-Neung was prepared as the same process of example 4 except that the process for obtaining roasted rice was performed at temperature of 160 to 180°C.

<Experimental example 1>

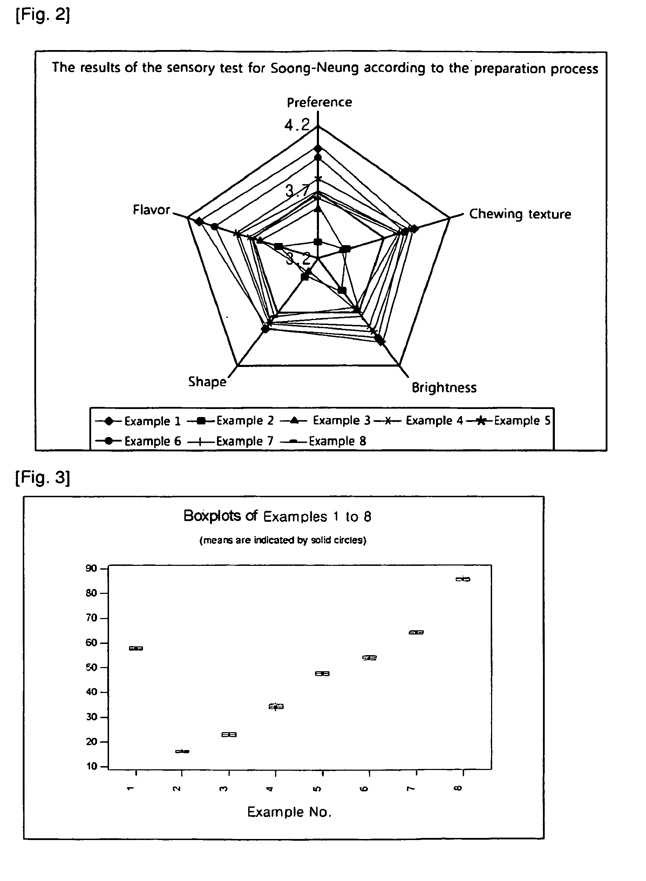

The sensory test for the Soong-Neung prepared by examples 1 to 8 was carried out and the result of the test was showed in Table 1 and Fig. 2

Table 1
[Table 1]
[Table]
The result of the sensory test

| Example | Preference | Chewing texture | Brightness | Shape | Flavor |
|---|---|---|---|---|---|
| Example 1 | 402 | 3.92 | 3.96 | 3.84 | 411 |
| Example 2 | 3.32 | 3.41 | 3.49 | 3.35 | 3.51 |
| Example 3 | 3.57 | 3.39 | 3.67 | 3.32 | 3.65 |
| Example 4 | 3.68 | 3.82 | 3.83 | 3.83 | 3.72 |
| Example 5 | 3.79 | 3.88 | 3.89 | 3.81 | 3.83 |
| Example 6 | 3.95 | 3.86 | 394 | 3.85 | 3.98 |
| Example 7 | 3.71 | 3.81 | 3.74 | 3.8 | 3.81 |
| Example 8 | 3.66 | 3.82 | 3.66 | 3.75 | 3.71 |
| P-value | **0.01 | **0.02 | **0.03 | **0.031 | **0.00 |

** There is a significant difference at 95% of CI(Statistically significance level) 95%.

* The sensory test was given mark with 5 point scale, that is, the test was marked as Excellent 5, Good 4, Not bad 3, Bad 2 and Worst 1.

<Experimental example 2>

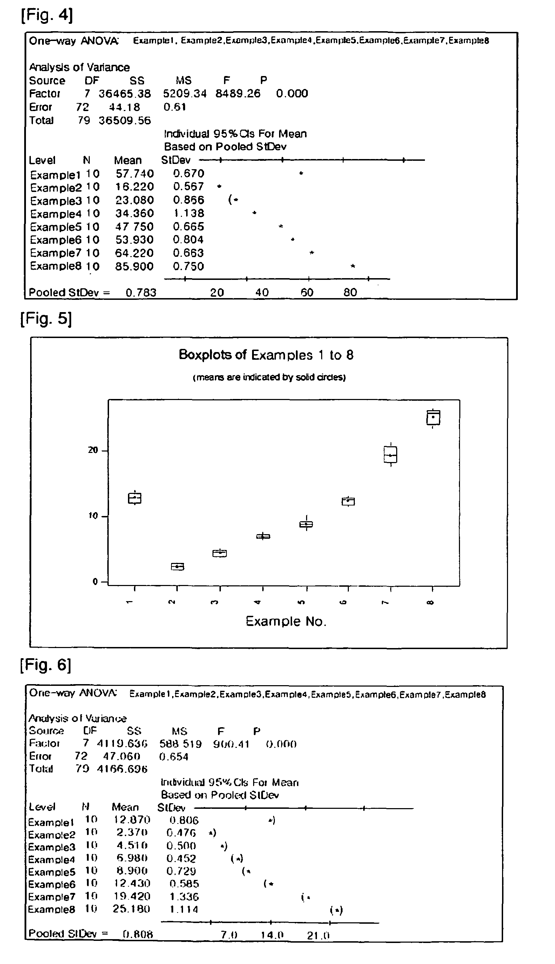

As for the Soong-Neung prepared by example 1 to 8, quantitative analysis to carbonyl compound and phenol compound which are known as constituent of flavor was performed and the result was shown in Figs. 3, 4, 5 and 6.

Soong-Neung of example 1 which was prepared by the conventional method, showed the most excellent flavor as containing a savory taste peculial to the Soong-Neung and excellent texture of grain of cooked rice.

In addition, both content of carbonyl compound and phenol compound which are major constituents of Soong-Neung flavor, were high at the most of examples except for examples 7 and 8.

In examples 7 and 8, carboxyl compound and phenol compound were excessively generated, which was negatively effected to a savory taste of Soong-Neung because of strong roasting flavor in sensory.

In examples 2 to 6, contents of carbonyl compound and phenol compound were significantly different, in which example 6 showed similar value to that of example 1 showing a target quality.

This result can be seen from that of the actual sensory test.

In examples 4 and 5, it was lacked in flavor peculiar to Soong-Neung. In examples 2 and 3, it were estimated to bad in taste as well as flavour peculiar to Soong-Neung.

Accordingly, it can be confirmed that the most suitable condition for embodying flavor peculiar to Soong-Neung is that of example 6.

### Industrial Applicability

The Soong-Neung in aseptic package prepared according to the process of the present invention can be preserved for a long time of more than 6 month at room temperature by the sterilization process, and have maximized perfume peculiar to Soong-Neung as diffusing perfume of roasted rice, and have a peculiar stickiness and thus have no change in perfume of Soong-Neung, and is excellent characteristics in divergency and smooth taste as erupting starch material from rice to water-for-cooking rice, such that the present invention is very useful to food industry since Soong-Neung of the present invention is equivalent in quality to that of prepared by conventional home cooking method and can be preserved for a long time.

## Claims

1. A process for preparing Soong-Neung in aseptic package comprising the steps of:
A) mixing polished rice and unpolished rice and roasting them to prepare roasted rice; washing the roasted rice with water;
B) washing polished rice and soaking it in the water; putting the roasted rice and the polished rice into a container and sterilizing them;
C) extracting roasted rice with hot water and filtering and sterilizing it with UV to obtain water-for-cooking rice;
D) adding the water-for-cooking rice to the container containing the sterilized mixture of roasted rice and polished rice to make Soong-Neung; and
E) sealing Soong-Neung under aseptic condition after cooking completed and cooling followed by boiling to prepare instant Soong-Neung in aseptic package.

2. The process for preparing Soong-Neung in aseptic package according to claim 1, in which the roasting is carried out at 130~145°C.

3. The process for preparing Soong-Neung in aseptic package according to claim 1, in which the ratio of the roasted rice and polished rice is 1:1.

4. The process for preparing Soong-Neung in aseptic package according to claim 1, in which the extracting of roasted rice with hot water is carried out for 30 minutes at 90°C.

## Patentansprüche

1. Verfahren zur Herstellung von Soong-Neung in aseptischer Verpackung, umfassend die Schritte des:
A) Mischens von geschältem Reis und ungeschältem Reis und deren Rösten, um gerösteten Reis herzustellen; Waschens des gerösteten Reises mit Wasser;
B) Waschens von geschältem Reis und dessen Tränkens in Wasser; Einfüllens des gerösteten Reises und des geschälten Reises in einen Behälter und deren Sterilisierens;
C) Extrahierens des gerösteten Reises mit heißem Wasser und dessen Filterns und Sterilisierens mit UV, um Reiskochwasser zu erhalten;
D) Zugebens des Reiskochwassers zu dem Behälter, der das sterilisierte Gemisch von abgeröstetem Reis und geschältem Reis enthält, um Soong-Neung zuzubereiten; und
E) Versiegelns von Soong-Neung unter aseptischer Bedingung nach fertigem Kochen und Kühlen, gefolgt von Kochen, um Instant-Soong-Neung in aseptischer Verpackung herzustellen.

2. Verfahren zur Herstellung von Soong-Neung in aseptischer Verpackung nach Anspruch 1, bei welchem das Rösten bei 130 °C - 145 °C ausgeführt wird.

3. Verfahren zur Herstellung von Soong-Neung in aseptischer Verpackung nach Anspruch 1, bei welchem das Verhältnis des geröstetem Reises und des geschälten Reises 1:1 ist.

4. Verfahren zur Herstellung von Soong-Neung in aseptischer Verpackung nach Anspruch 1, bei welchem das Extrahierens des gerösteten Reises mit heißem Wasser für 30 Minuten bei 90 °C ausgeführt wird.

## Revendications

1. Procédé de préparation de Soong-Neung dans un emballage aseptique comprenant les étapes suivantes :
A) mélanger du riz poli et du riz non poli et les griller pour préparer du riz grillé ; laver le riz grillé avec de l'eau ;
B) laver du riz poli et l'immerger dans l'eau ; mettre le riz grillé et le riz poli dans un récipient et les stériliser ;
C) extraire le riz grillé avec de l'eau chaude et le filtrer et le stériliser avec des UV pour obtenir de l'eau destinée à la cuisson de riz ;
D) ajouter l'eau destinée à la cuisson de riz dans le récipient contenant le mélange stérilisé de riz grillé et de riz poli pour fabriquer du Soong-Neung ; et
E) sceller le Soong-Neung dans des conditions aseptiques après l'achèvement de la cuisson et refroidissement suivi par une ébullition pour préparer du Soong-Neung instantané dans un emballage aseptique.

2. Procédé de préparation de Soong-Neung dans un emballage aseptique selon la revendication 1, dans lequel le grillage est réalisé à 130~145°C.

3. Procédé de préparation de Soong-Neung dans un emballage aseptique selon la revendication 1, dans lequel le rapport du riz grillé au riz poli est de 1:1.

4. Procédé de préparation de Soong-Neung dans un emballage aseptique selon la revendication 1, dans lequel l'extraction du riz grillé avec de l'eau chaude est réalisée pendant 30 minutes à 90°C.
